(19) Europäisches Patentamt
European Patent Office
Office européen des brevets

(11) EP 3 805 885 A1

(12) EUROPEAN PATENT APPLICATION
published in accordance with Art. 153(4) EPC

(43) Date of publication:
14.04.2021 Bulletin 2021/15

(51) Int Cl.:
G05B 23/02 (2006.01)

(21) Application number: 19811322.7

(86) International application number:
PCT/JP2019/017645

(22) Date of filing: 25.04.2019

(87) International publication number:
WO 2019/230282 (05.12.2019 Gazette 2019/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.05.2018 JP 2018104007

(71) Applicants:
• Yokogawa Electric Corporation
Tokyo 180-8750 (JP)

• Yokogawa Solution Service Corporation
Musashino-shi, Tokyo 180-8750 (JP)

(72) Inventors:
• NAKABAYASHI, Akio
Musashino-shi, Tokyo 180-8750 (JP)
• SHIMPUKU, Keisuke
Musashino-shi, Tokyo 180-8750 (JP)
• ARIYOSHI, Takeshi
Musashino-shi, Tokyo 180-8750 (JP)

(74) Representative: Hoffmann Eitle
Patent- und Rechtsanwälte PartmbB
Arabellastraße 30
81925 München (DE)

(54) MALFUNCTION DETECTION DEVICE, MALFUNCTION DETECTION METHOD, MALFUNCTION DETECTION PROGRAM, AND RECORDING MEDIUM

(57) A malfunction detection device provided with an acquisition unit, a cutout unit, a feature extraction unit, a learning unit, and a deviation degree computation unit. The acquisition unit is configured to acquire device data. The cutout unit is configured to cut out data from the acquired device data based on predetermined conditions. The feature extraction unit is configured to extract a feature vector from the cut-out device data. The learning unit is configured to analyze the extracted feature vector. The learning unit is configured to generate a model of the feature vector based on analysis results. The deviation degree computation unit is configured to compute a degree of deviation between a feature vector of newly acquired device data and the model of the feature vector.

FIG. 1

## Description

[Technical Field]

The present invention relates to a malfunction detection device, a malfunction detection method, a malfunction detection program, and a recording medium.
The present application claims priority on the basis of Japanese Patent Application No. 2018-104007, filed May 30, 2018, the entire disclosure of which is incorporated herein by reference.

[Background Art]

There are cases in which a malfunction detection device detects malfunctions in devices such as those in manufacturing facilities or the like. The malfunction detection device acquires data regarding a detection target device in a time period during which a malfunction is not detected in the device (during normal operation). The malfunction detection device collects, in a database, data obtained in the time period during which a malfunction is not detected (hereinafter referred to as "normal-time data").
Conventional malfunction detection devices use principal component analysis, the MT (Mahalanobis-Taguchi) method, neural networks, or the like to generate models of normal-time data based on data collected in databases having large storage capacities. Malfunction detection devices detect malfunctions in detection target devices based on the degree of deviation (degree of abnormality) between newly acquired data and a model of normal-time data. Additionally, conventional malfunction detection devices may detect malfunctions in detection target devices based on the degree of deviation between newly acquired data and samples of normal-time data without generating a model of normal-time data.

[Related Literature]

[Patent Literature]

[Patent Literature 1]

Japanese Unexamined Patent Application, First Publication No. 2013-218725

[Summary of Invention]

[Technical Problem]

There are cases in which normal-time data such as device vibrations, electric currents, images, and the like are sampled at a high frequency. For this reason, databases for collecting normal-time data must have a large storage capacity. However, there are cases in which it is difficult, in terms of cost-effectiveness, to install a database having a large storage capacity at the site of a manufacturing facility or the like. Additionally, there are cases in which it is difficult to install a database at the site of a manufacturing facility or the like unless it is known in advance how large the storage capacity of the database needs to be.
In view of the above-mentioned circumstances, an objective of the present invention is to provide a malfunction detection device, a malfunction detection method, a malfunction detection program, and a recording medium that can detect malfunctions in detection target devices even without a database having a large storage capacity.

[Solution to Problem]

One embodiment of the present invention is a malfunction detection device provided with an acquisition unit configured to acquire data regarding a detection target device; a cutout unit configured to cut out data from the acquired data based on predetermined conditions; a feature extraction unit configured to extract a feature vector from the cut-out data; a learning unit configured to analyze the extracted feature vector and generate a model of the feature vector based on analysis results; and a deviation degree computation unit configured to compute a degree of deviation between the feature vector of newly acquired data and the model.
Due to the above-mentioned features, the malfunction detection device computes the degree of deviation by analyzing data before the data is collected, thereby allowing a malfunction in a detection target device to be detected even without a database having a large storage capacity.
One embodiment of the present invention is the above-mentioned malfunction detection device, further provided with an output unit configured to output the degree of deviation.

Due to the above-mentioned feature, the malfunction detection device can output the degree of deviation to an external device.

One embodiment of the present invention is the above-mentioned malfunction detection device, wherein, in case that the degree of deviation indicates a malfunction in the detection target device, the output unit is configured to output the degree of deviation to a notification device configured so as to issue an alarm to an operator in a plant in which the detection target device is installed.

Due to the above-mentioned feature, the malfunction detection device can make the notification device issue an alarm to an operator in accordance with the computed degree of deviation, thereby allowing the operator to be notified of a malfunction in case that the malfunction occurs.

One embodiment of the present invention is the above-mentioned malfunction detection device, wherein the acquisition unit is configured to acquire the data from a plurality of sensors that acquire the data by sensing a state of the detection target device.

Due to the above-mentioned feature, the malfunction detection device can acquire data from a plurality of sensors.

One embodiment of the present invention is the above-mentioned malfunction detection device, wherein the predetermined conditions are chronologically consecutive time periods.

Due to the above-mentioned feature, the malfunction detection device can acquire data indicating the state of the detection target device during a certain time period.

One embodiment of the present invention is the above-mentioned malfunction detection device, wherein, in case that a learning control signal acquired from an external device is a prescribed value, the learning unit is configured to analyze the extracted feature vector and generate the model of the feature vector based on analysis results.

Due to the above-mentioned feature, the malfunction detection device can perform a learning process only at designated timings.

One embodiment of the present invention is the above-mentioned malfunction detection device, wherein the learning unit is configured to generate, as the model, a multivariate normal distribution represented by a mean vector and a covariance matrix of the extracted feature vector.

Due to the above-mentioned feature, the malfunction detection device can allow the model generated by learning to be successively updated with each sample.

One embodiment of the present invention is the above-mentioned malfunction detection device, wherein the malfunction detection device further includes a storage unit that stores a cumulative sum of feature vectors, and a cumulative sum of matrix products of the feature vectors and transpose matrices thereof; and in case that a learning control signal acquired from an external device is a prescribed value, the learning unit is configured to add a feature vector extracted by the feature extraction unit to the cumulative sum of the feature vectors stored in the storage unit and update the cumulative sum of the feature vectors stored in the storage unit with the obtained sum, and add the cumulative sum of the matrix product of the matrix of the feature vector extracted by the feature extraction unit and a transpose matrix thereof to the cumulative sum of the matrix products of the feature vectors and transpose matrices thereof stored in the storage unit and update the cumulative sum of the matrix products of the feature vectors and transpose matrices thereof stored in the storage unit with the obtained sum.

Due to the above-mentioned feature, the malfunction detection device can update the cumulative sum of the feature vectors and the cumulative sum of the matrix products of the feature vectors and the transpose matrices thereof based on the feature vector extracted from the data acquired with each sample. The multivariate normal distribution, which is the model, is represented by the cumulative sum of the feature vectors and the cumulative sum of the matrix products of the feature vectors and transpose matrices thereof. Thus, the multivariate normal distribution, which is the model, can be updated each time data is acquired with each sample.

One embodiment of the present invention is the above-mentioned malfunction detection device, wherein the deviation degree computation unit is configured to compute, as the degree of deviation, a negative log-likelihood of the feature vector extracted by the feature extraction unit.

Due to the above-mentioned feature, the malfunction detection device can compute a negative log-likelihood as the degree of deviation and express multiplication as addition by means of logarithmic expressions, thereby allowing the processing for the degree of deviation to be performed with a small computing load.

One embodiment of the present invention is the above-mentioned malfunction detection device, further including a postprocessing unit configured to perform a predetermined process based on the degree of deviation.

Due to the above-mentioned feature, the malfunction detection device can reduce noise in the computed degree of deviation. The malfunction detection device can emphasize the computed degree of deviation.

One embodiment of the present invention is the above-mentioned malfunction detection device, wherein the predetermined process includes computing the degree of deviation every prescribed period of time, and computing one or more of a simple moving average, an exponentially smoothened average, and a maximum value of the degree of deviation.

Due to the above-mentioned feature, the malfunction detection device can detect a malfunction in the detection target device by computing one or more of a simple moving average, an exponentially smoothened average, and a maximum value of the degree of deviation.

One embodiment of the present invention is the above-mentioned malfunction detection device, further including a plurality of selection units; and a combining unit; wherein the learning unit includes a plurality of learning units; the deviation degree computation unit includes a plurality of deviation degree computation units; each of the plurality of selection units is configured to select, in accordance with a prescribed process, whether or not to learn the extracted feature vector; in case that the selection units select that the extracted feature vector is to be learned, each of the plurality of learning units is configured to analyze the feature vector and generate a plurality of the models based on analysis results; in case that the selection units select that the extracted feature vector is to be learned, each of the plurality of deviation degree computation units is configured to compute the degree of deviation between the feature vector of the acquired data and the model; and the combining unit is configured to combine the plurality of degrees of deviation computed by the plurality of deviation degree computation units.

Due to the above-mentioned features, the malfunction detection device can stably estimate a model of the feature vectors by taking into account differences in model estimates due to variations in the data. The malfunction detection device can stably compute the degree of deviation based on a feature vector model taking into account the differences in the model estimates due to variations in the data.

One embodiment of the present invention is the above-mentioned malfunction detection device, wherein each of the plurality of selection units is configured to select whether or not to learn the extracted feature vector based on a realized value of uniformly distributed random numbers.

Due to the above-mentioned feature, the malfunction detection device selects whether or not to learn a feature vector based on a random number, and generates a plurality of the models based on different data. Thus, the estimation of a reference pattern model can be yet further stabilized.

One embodiment of the present invention is the above-mentioned malfunction detection device, wherein the deviation degree computation unit is configured to compute an interpreted value of the feature vector in the model.

Due to the above-mentioned feature, the degree of deviation can be computed for each element in a feature vector.

One embodiment of the present invention is the above-mentioned malfunction detection device, wherein the deviation degree computation unit is configured to compute, as the interpreted value, a feature vector obtained by performing an inverse transform that returns the feature vector, which has been projected in principal component space, to the space of the feature vector.

Due to the above-mentioned feature, the malfunction detection device can easily compute the interpreted value by using a machine learning algorithm.

One embodiment of the present invention is the above-mentioned malfunction detection device, further including an element-separate deviation degree computation unit configured to compute the degree of deviation for each element in the feature vector; and a deviation degree summation unit configured to sum the degrees of deviation computed for each element to compute a degree of deviation of the feature vector.

Due to the above-mentioned feature, the malfunction detection device can compute the degree of contribution of an extracted feature vector.

One embodiment of the present invention is the above-mentioned malfunction detection device, wherein the element-separate deviation degree computation unit is configured to use the square of the absolute value of the difference between an element in the feature vector and the interpreted value as the degree of deviation for each element in the feature vector.

Due to the above-mentioned feature, the malfunction detection device can compute the degree of deviation for each element in a feature vector.

One embodiment of the present invention is the above-mentioned malfunction detection device, wherein the deviation degree summation unit is configured to divide, by the number of elements, the sum total of the degrees of deviation of the elements computed by the element-separate deviation degree computation unit, and use the square root of the quotient as the degree of deviation of the feature vector.

Due to the above-mentioned feature, the malfunction detection device can compute the degree of contribution of a feature vector by summing the degrees of deviation for each element in the feature vector.

One embodiment of the present invention is a malfunction detection method that is performed by a malfunction detection device, the malfunction detection method including acquiring data regarding a detection target device; cutting out data from the acquired data based on predetermined conditions; extracting a feature vector from the cut-out data; analyzing the extracted feature vector and generating a model of the feature vector based on analysis results; and computing a degree of deviation between the feature vector of newly acquired data and the model.

Due to the above-mentioned features, a malfunction detection device can, by performing the malfunction detection method, detect a malfunction in a detection target device even without a database having a large storage capacity.

One embodiment of the present invention is a malfunction detection program for making a computer perform acquiring data regarding a detection target device; cutting out data from the acquired data based on predetermined conditions; extracting a feature vector from the cut-out data; analyzing the extracted feature vector and generating a model of the feature vector based on analysis results; and computing a degree of deviation between the feature vector of newly acquired data and the model.

Due to the above-mentioned features, a malfunction detection device can, by running the malfunction detection program, detect a malfunction in a detection target device even without a database having a large storage capacity.

One embodiment of the present invention is a computer-readable recording medium recording a malfunction detection program for making a computer perform acquiring data regarding a detection target device; cutting out data from the acquired data based on predetermined conditions; extracting a feature vector from the cut-out data; analyzing the extracted feature vector and generating a model of the feature vector based on analysis results; and computing a degree of deviation between the feature vector of newly acquired data and the model.

Due to the above-mentioned features, a malfunction detection device can, by running the malfunction detection program recorded on the computer-readable recording medium, detect a malfunction in a detection target device even without a database having a large storage capacity.

[Advantageous Effects of Invention]

According to the present invention, a degree of deviation is computed by analyzing data before the data is collected, thereby allowing a malfunction in a detection target device to be detected even without a database having a large storage capacity.

[Brief Description of Drawings]

Fig. 1 is a diagram illustrating an example of the structure of a malfunction detection device according to a first embodiment.
Fig. 2 is a diagram illustrating an example of a cutout process in the first embodiment.
Fig. 3 is a flow chart illustrating an example of the operations in the malfunction detection device according to the first embodiment.
Fig. 4 is a diagram illustrating an example of the structure of a malfunction detection device according to a second embodiment.
Fig. 5 is a flow chart illustrating an example of the operations in the malfunction detection device according to the second embodiment.
Fig. 6 is a diagram illustrating an example of the structure of a malfunction detection device according to a third embodiment.
Fig. 7 is a flow chart illustrating an example of the operations in the malfunction detection device according to the third embodiment.
Fig. 8 is a diagram illustrating an example of the structure of a malfunction detection device according to a fourth embodiment.
Fig. 9 is a flow chart illustrating an example of the operations in the malfunction detection device according to the fourth embodiment.

[Description of Embodiments]

Embodiments of the present invention will be explained in detail with reference to the drawings.

(First Embodiment)

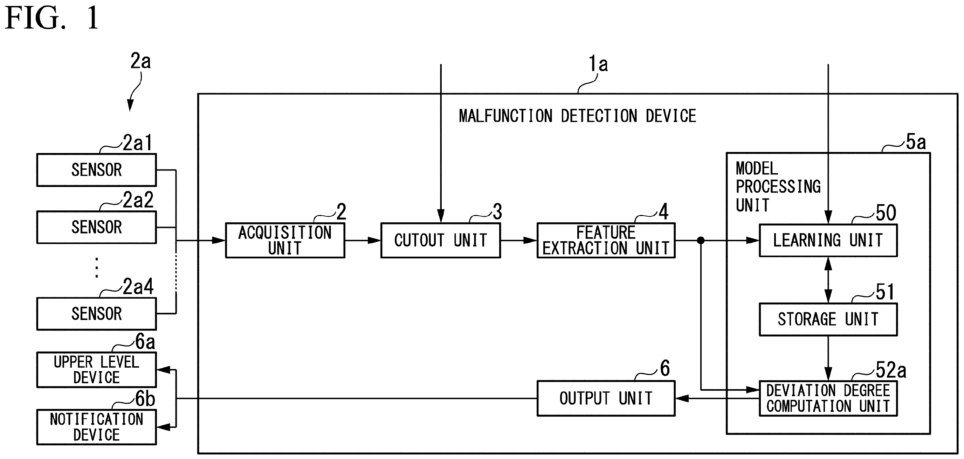

Fig. 1 is a diagram illustrating an example of the structure of a malfunction detection device 1a. The malfunction detection device 1a is an information processing device, for example, a personal computer, a workstation, or the like. The malfunction detection device 1a may be an information processing unit provided, for example, in a PLC (Programmable Logic Controller).

The malfunction detection device 1a acquires data (hereinafter referred to as "device data") regarding a device that is a detection target, and analyzes the acquired device data. The device data does not need to be collected in a database having a large storage capacity. The detection target device is not limited to a specific device, and for example, may be an electric motor or a pump installed in a manufacturing facility. The device data is data regarding physical quantities, for example, real-number data regarding vibrations, temperature, current, torque, pressure, flow rate, or the like. The device data may be an instruction value provided to a device and may, for example, be an instruction value that represents starting/stopping, a processing mode, or a processing amount.

The malfunction detection device 1a, based on the results of analysis of the device data (learning results), generates a feature vector model of that device data. The malfunction detection device 1a detects a malfunction in the detection target device based on the the degree of deviation (degree of abnormality) between a feature vector of newly acquired data and the model generated on the basis of the device data.

The malfunction detection device 1a is provided with sensors 2a, an acquisition unit 2, a cutout unit 3, a feature extraction unit 4, a model processing unit 5, an output unit 6, a higher-level device 6a, and a notification device 6b. Some or all of these functional units are realized by a processor such as a CPU (Central Processing Unit) executing a program. Additionally, some or all of the functional units may be realized by using hardware such as an FPGA (Field-Programmable Gate Array), an LSI (Large-Scale Integration) or an ASIC (Application Specific Integrated Circuit).

The sensors 2a include a plurality of sensors, for example, the first sensor 2a1 to the fourth sensor 2a4 described below, for sensing the state of a detection target device and acquiring device data. The first sensor 2a1 to the fourth sensor 2a4 transmit the acquired device data to the acquisition unit 2 by means of cable or wireless communication.

The acquisition unit 2 acquires device data by means of cable or wireless communication from the sensors 2a that have sensed the state of the detection target device. The acquisition unit 2 may acquire device data by means of cable or wireless communication from an interface provided in the detection target device. The acquisition unit 2 links the acquired device data with time information (time stamp). The acquisition unit 2 may acquire, from an external device, a file containing device data linked to time information. The format of the file containing the device data is, for example, the CSV (Comma-Separated Values) format.

The acquisition unit 2 converts the format of the acquired device data to a device data format used by the cutout unit 3. For example, in case that the acquisition unit 2 is an AD converter (analog/digital converter), then the acquisition unit 2 converts analog signals representing device data acquired from the sensors to digital signals used by the cutout unit 3. For example, in case that the acquisition unit 2 is a server, then the acquisition unit 2 converts packets acquired through a LAN (Local Area Network) to baseband signals used by the cutout unit 3. The device data X(t) is represented by Expression (1).

[Expression 1]

$$X(t) \in \mathbb{R}^d \quad \dots (1)$$

In this case, t is a variable representing discrete time (sampling times). The symbol d represents the number of device data acquired by the acquisition unit 2.

The cutout unit 3 acquires a signal (hereinafter referred to as a "cutout control signal") for controlling the device data cutout process. The cutout unit 3, in accordance with the cutout control signal, cuts out chronologically consecutive device data from the device data acquired by the acquisition unit 2.

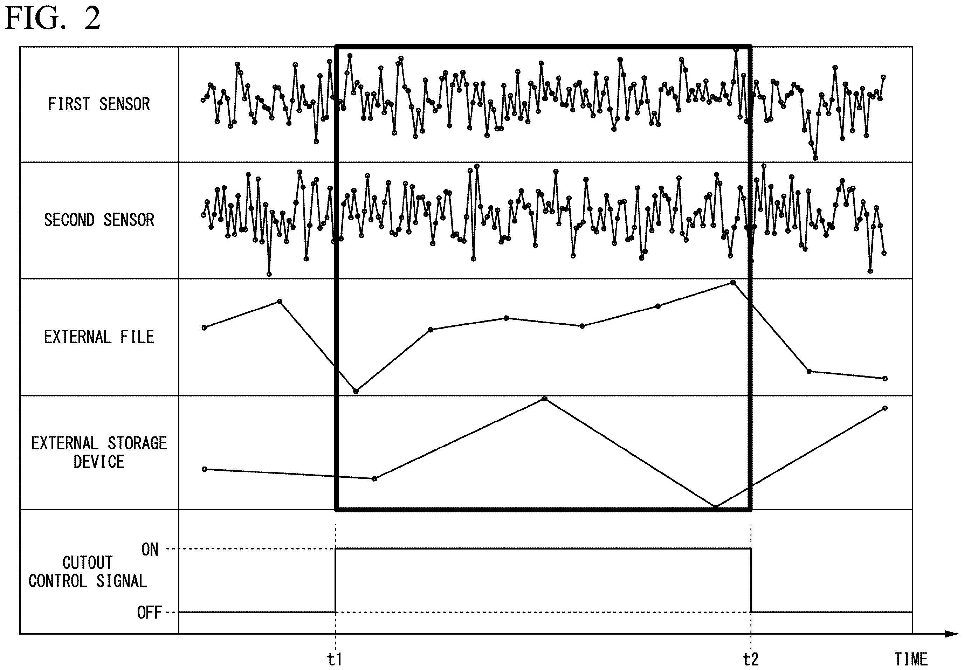

Fig. 2 is a diagram illustrating an example of the cutout process. The device data of the first sensor 2a1 is, for example, vibration data for the detection target device. The device data of the second sensor 2a2 is, for example, pressure data for the detection target device. The device data of the external file is, for example, electric current data for the detection target device detected by the third sensor 2a3. The device data of the external storage device is, for example, voltage data for the detection target device detected by the fourth sensor 2a4. The cutout control signal, for example, complies with device data representing whether a switch or the like is in the on or off state. These are just one example of device data.

The cutout unit 3 cuts out chronologically consecutive device data (segments) for a time period during which the cutout control signal representing the on or off state represents the on state (the period from the time t1 to the time t2). The device data S(k) that have been cut out are represented by Expression (2).

[Expression 2]

$$S(k) = \{X(t), X(t+1), \cdots, X(t+n_k-1)\} \in \mathbb{R}^{n_k \times d} \quad \dots (2)$$

In this case, the symbol k represents serially assigned numbers of the cut-out device data. The symbol $n_k$ represents the number of samples (hereinafter referred to as the "segment length") included in the k-th cut-out device data. The segment length does not need to be constant.

The cutout unit 3 may cut out the chronologically consecutive device data from the time at which the starting end of a cutout control signal, which is a pulsed signal, is detected until a time at which a prescribed duration has elapsed. The cutout unit 3 may cut out the chronologically consecutive device data from the time at which the terminating end of a cutout control signal, which is a pulsed signal, is detected until a time at which a prescribed duration has elapsed.

The cutout unit 3 may cut out the chronologically consecutive device data for a time period from the time at which the cutout control signal, which is a pulsed signal, is detected until the time at which the next cutout control signal is detected. The cutout unit 3 may cut out the chronologically consecutive device data for a time period from the time at which predetermined device data becomes equal to or higher than a threshold value until a time at which that device data becomes lower than the threshold value. Additionally, the cutout unit 3 may cut out the device data in a regular cycle without depending on external signals.

The feature extraction unit 4 analyzes the cut-out device data and thereby extracts a feature vector from the cut-out device data S(k). In other words, the feature extraction unit 4 generates a feature vector z(k) of the cut-out device data as indicated by Expression (3).

[Expression 3]

$$S(k) \in \mathbb{R}^{n_k \times d} \to z(k) \in \mathbb{R}^m \quad \text{... (3)}$$

In this case, the symbol z represents a feature vector that is a column vector having m-dimensional real-number values as the domain. The method by which the feature extraction unit 4 extracts the feature vector is not limited to a specific method. For example, the feature extraction unit 4 computes statistical quantities such as the mean, the standard deviation, the minimum value, and the maximum value relating to the cut-out device data having the serially assigned number k. In the case in which the feature extraction unit 4 computes these four statistical quantities, the feature extraction unit 4 generates an m-dimensional ($m = 4 \times d$) feature vector. The feature extraction unit 4 may extract, as a feature vector, the power for each periodic signal obtained by decomposing the device data by means of a Fourier transform. The feature extraction unit 4 may also extract an order statistical quantity of the device data as the feature vector.

The model processing unit 5a analyzes extracted feature vectors. The model processing unit 5a generates a feature vector model (reference pattern model) based on the analysis results. The model processing unit 5a is provided with a learning unit 50, a storage unit 51, and a deviation degree computation unit 52a.

The learning unit 50 acquires a learning control signal from an external device. The learning control signal is a signal representing, for example, an on or off state. The on or off state of the learning control signal is operated, for example, by a user or an external system. In case that the learning control signal represents the on state, the learning unit 50 acquires an extracted feature vector from the feature extraction unit 4. For each of the extracted feature vectors, the learning unit 50 analyzes (learns) the feature vector. The learning unit 50 generates a feature vector model based on the results of analysis of the feature vectors. In this way, the learning unit 50 successively generates feature vector models.

The feature vector model is not limited to a model in a specific form. For example, it may be a model represented by simultaneous equations provided with constraint conditions (relationships), as in Expression (4), that must be satisfied by consecutive variables between the elements in the feature vector z. The learning unit 50 obtains constraint conditions as in Expression (4) by performing principal component analysis. The learning unit 50 may also obtain the constraint conditions by using a neural network.

[Expression 4]

$$f_1(z) = 0, \quad f_2(z) = 0, \cdots \quad \text{... (4)}$$

The feature vector model may, for example, be a model represented by a probability density distribution p(z) of the feature vectors z. For example, the learning unit 50 generates a model represented by a multivariate normal distribution of the feature vectors z. The multivariate normal distribution of the feature vectors z is represented by a mean vector $\mu \in \mathbb{R}^m$ and a covariance matrix $\Sigma \in \mathbb{R}^{m \times m}$ of the feature vectors z. The learning unit 50 computes the multivariate normal distribution of the feature vectors z as in Expression (5) and Expression (6).

[Expression 5]

$$\mu(k) = \frac{1}{\eta(k)} z_{sum}(k) \quad \text{... (5)}$$

[Expression 6]

$$\Sigma(k) = \frac{1}{\eta(k)-1}\left(Z_{\text{sum}}(k) - \eta(k) \cdot \mu(k)\mu^{\text{T}}(k)\right) \quad \dots (6)$$

In this case, the symbol $z_{\text{sum}}$ represents the cumulative sum of the feature vectors. The symbol $Z_{\text{sum}}$ represents the cumulative sum of matrix products of the feature vector matrices and vectors obtained by transposing those feature vectors. Each of these elements constitute sufficient statistical quantities for a multivariate normal distribution. In other words, the mean vector and the covariance matrix of the multivariate normal distribution can be computed on the basis of $z_{\text{sum}}$ and $Z_{\text{sum}}$.

On the basis of the cumulative sum $z_{\text{sum}}(k - 1)$ of the feature vectors based on the first to $(k - 1)$-th cut-out device data and the feature vector $z(k)$ of the $k$-th cut-out device data, the learning unit 50 computes the cumulative sum $z_{\text{sum}}(k)$ of the feature vectors based on the first to $k$-th cut-out device data, as indicated in Expression (7).

[Expression 7]

$$z_{\text{sum}}(k) = \begin{cases} z_{\text{sum}}(k-1) + z(k) & : \text{learning control signal ON} \\ z_{sum}(k-1) & : \text{learning control signal OFF} \end{cases} \quad \dots (7)$$

On the basis of the cumulative sum $Z_{\text{sum}}(k - 1)$ of the matrix products of the feature vectors based on the first to $(k - 1)$-th cut-out device data and vectors obtained by transposing those feature vectors, and the feature vector matrix $Z(k)$ of the $k$-th cut-out device data, the learning unit 50 computes the cumulative sum $Z_{\text{sum}}(k)$ of the matrix products of the feature vectors based on the first to $k$-th cut-out device data and vectors obtained by transposing those feature vectors, as indicated in Expression (8).

[Expression 8]

$$Z_{\text{sum}}(k) = \begin{cases} Z_{\text{sum}}(k-1) + z(k)z^{T}(k) & : \text{learning control signal ON} \\ Z_{sum}(k-1) & : \text{learning control signal OFF} \end{cases}$$

$$\dots (8)$$

The learning unit 50 computes, as a model of the feature vectors z, a multivariate normal distribution defined by the mean vector $\mu(k)$, the covariance matrix $\Sigma(k)$, the cumulative sum $z_{\text{sum}}(k)$ of the feature vectors, and the cumulative sum $Z_{\text{sum}}(k)$ of the matrix products of the feature vectors, without collecting the device data acquired by the acquisition unit 2 in a database having a large storage capacity.

The learning unit 50 may compute a probability distribution other than a multivariate normal distribution as long as it is a probability distribution that approximates the acquired device data. For example, probability distributions other than a multivariate normal distribution include mixed multivariate normal distributions, and empirical density functions based on multiple samples of device data. The learning unit 50 stores the generated feature vector model in the storage unit 51.

The storage unit 51 is a non-volatile storage device (non-temporary recording medium) such as a flash memory. The storage unit 51 stores the feature vector model. the feature vector model is represented, for example, by numerical data. The feature vector model is updated with a feature vector model generated by the learning unit 50. The storage unit 51 may store a program. The storage unit 51 may further be provided with a volatile recording medium such as RAM (Random Access Memory).

The deviation degree computation unit 52a acquires, from the feature extraction unit 4, a feature vector $z_{\text{test}}$ of device data newly acquired after the feature vector model has been generated. The deviation degree computation unit 52a computes the degree of deviation (degree of abnormality) between the feature vector $z_{\text{test}}$ and the feature vector model stored in the storage unit 51.

For example, in case that the feature vector model is represented by a probability distribution p(z) of the feature vectors z, the deviation degree computation unit 52a computes the negative log-likelihood of $z_{\text{test}}$ as the degree of deviation. For example, the deviation degree computation unit 52a may compute the degree of deviation by performing a prescribed computation process on numerical parameters representing the feature vector model. For example, for a model based on constraint conditions, such as Expression (4), between the elements in the feature vector z, the deviation degree computation unit 52a may compute the degree of non-conformity (for example, the L2 norm of f(z)) of the constraint conditions as the degree of deviation.

The output unit 6 outputs, to the higher-level device 6a and the notification device 6b, information representing the degree of deviation computed by the deviation degree computation unit 52a, for example, by wired communication such as the internet or Ethernet (registered trademark), or by wireless communication such as a cellular network or WiFi (registered trademark).

The higher-level device 6a, for example, a computer such as a personal computer or a workstation that is used by an operator in a plant, receives the information representing the degree of deviation from the output unit 6, and displays an image representing the degree of deviation. The higher-level device 6a may, for example, be a cloud server that receives information representing the degree of deviation from the output unit 6 and provides information representing the degree of deviation to a client computer.

The notification device 6b is provided, for example, with a display device such as a liquid crystal display device, or a speaker that outputs audio. The notification device 6b receives information representing the degree of deviation from the output unit 6 and displays an image representing the degree of deviation. For example, in case that the information representing the degree of deviation indicates a malfunction in the detection target device, the notification device 6b may issue an alarm, for example, to an operator in a plant, by playing a warning sound or audio.

Next, an example of the operations in the malfunction detection device 1a will be explained.

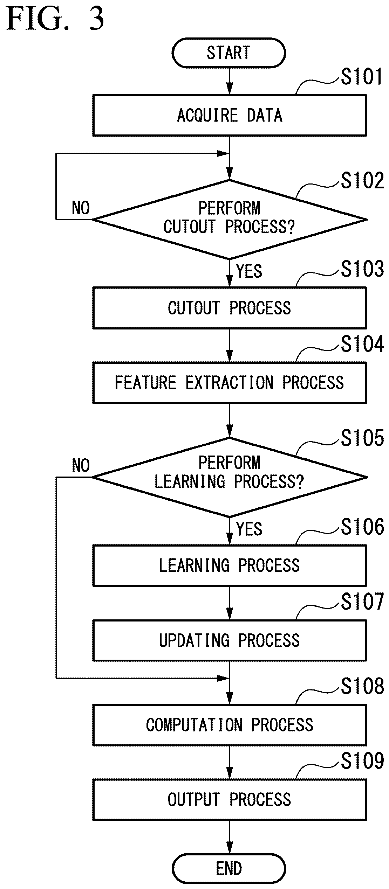

Fig. 3 is a flow chart illustrating an example of the operations in the malfunction detection device 1a. The acquisition unit 2 acquires device data (step S101). The cutout unit 3 determines whether or not the conditions for performing a cutout process are established. For example, the cutout unit 3 determines that the conditions for performing a cutout process are established in case that the cutout control signal represents the on state (step S102).

In case that the conditions for performing a cutout process are not established (step S102: NO), then the cutout unit 3 performs the process in step S102 again. In case that the conditions for performing a cutout process are established (step S102: YES), then the cutout unit 3 cuts out, from the acquired device data, data based on predetermined conditions. For example, the cutout unit 3 cuts out chronologically consecutive device data based on the detection time of the cutout control signal (step S103). The feature extraction unit 4 extracts a feature vector z from the cut-out device data (step S104).

The learning unit 50 determines whether or not the conditions for performing a learning process are established. For example, in case that the learning control signal is in the on state, then the learning unit 50 determines that the conditions for performing a learning process are established (step S105). In case that the conditions for performing a learning process are not established (step S105: NO), then the deviation degree computation unit 52a performs the process in step S108.

In case that the conditions for performing a learning process are established (step S105: YES), then the learning unit 50 analyzes the extracted feature vector z and generates a feature vector model based on the analysis results (step S106). The learning unit 50 updates the feature vector model stored in the storage unit 51 with the newly generated feature vector model (step S107).

The deviation degree computation unit 52a acquires a feature vector of newly acquired device data from the feature extraction unit 4. The deviation degree computation unit 52a computes the degree of deviation between the feature vector of the newly acquired device data and the feature vector model stored in the storage unit 51 (step S108). The output unit 6 outputs the computed deviation degree to the external device and the like (step S109).

The order in which the process from step S105 to step S107 and the process in step S108 are performed may be switched.

As described above, the malfunction detection device 1a in the first embodiment is provided with an acquisition unit 2, a cutout unit 3, a feature extraction unit 4, a learning unit 50, and a deviation degree computation unit 52a. The acquisition unit 2 acquires device data. The cutout unit 3 cuts out data from the acquired device data based on predetermined conditions. The feature extraction unit 4 extracts a feature vector from the cut-out device data. The learning unit 50 analyzes the extracted feature vector. The learning unit 50 generates a feature vector model based on the analysis results. The deviation degree computation unit 52a computes the degree of deviation between a feature vector of newly acquired device data and the feature vector model.

As a result thereof, the malfunction detection device 1a in the first embodiment computes a degree of deviation by analyzing data before the data is collected, thereby allowing a malfunction in a detection target device to be detected even without a database having a large storage capacity.

(Second Embodiment)

The second embodiment differs from the first embodiment in that the malfunction detection device is provided with a postprocessing unit.

Regarding the second embodiment, the differences from the first embodiment will be explained.

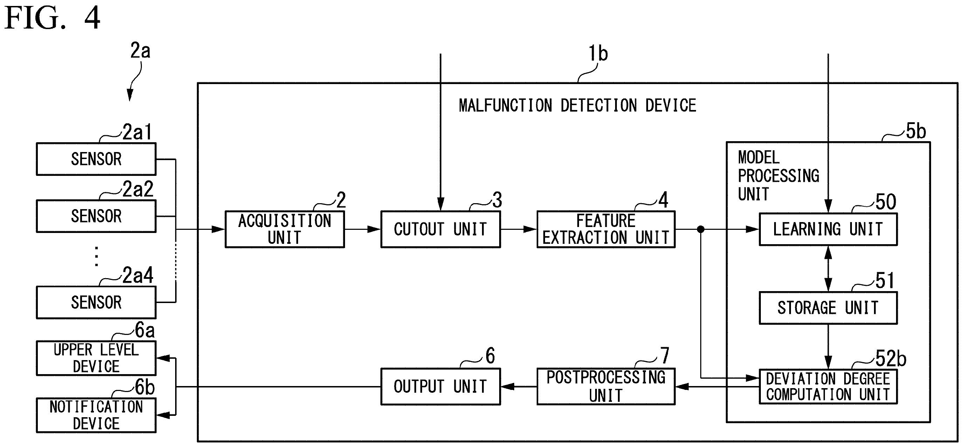

Fig. 4 is a diagram illustrating an example of the structure of a malfunction detection device 1b. The malfunction detection device 1b is provided with an acquisition unit 2, a cutout unit 3, a feature extraction unit 4, a model processing unit 5b, an output unit 6, and a postprocessing unit 7. The model processing unit 5b is provided with a learning unit 50, a storage unit 51, and a deviation degree computation unit 52b.

The postprocessing unit 7 acquires a computed degree of deviation from the deviation degree computation unit 52b. The postprocessing unit 7 computes the degree of deviation in every standard period of time. For example, the postprocessing unit 7 may compute the mean (simple moving average) of the degree of deviation for a prescribed number of device data samples. For example, the postprocessing unit 7 may compute a weighted average (exponentially smoothed average) of the degree of deviation for a prescribed number of device data samples. For example, the postprocessing unit 7 may compute a statistical quantity (for example, the maximum value) of the degree of deviation in a standard period of time. The output unit 6 outputs the degree of deviation to an external device or the like.

Next, an example of the actions of the malfunction detection device 1b will be explained.

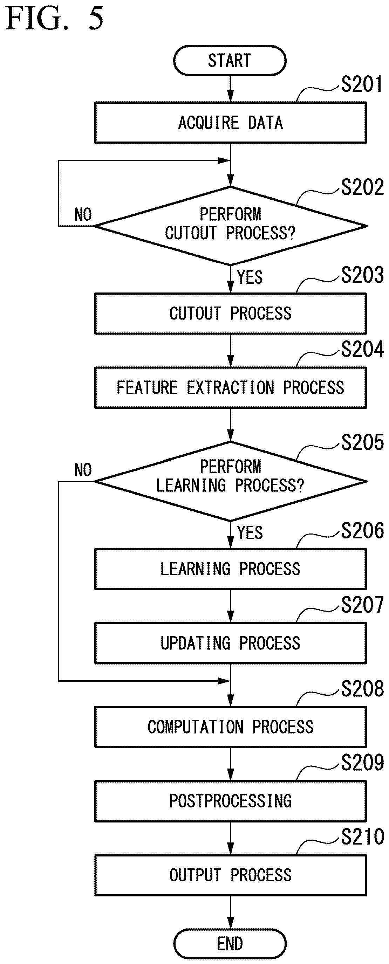

Fig. 5 is a flow chart illustrating an example of the operations in the malfunction detection device 1b. The process from step S201 to step S208 is the same as the process from step S101 to step S108 illustrated in Fig. 3. After step S208, the postprocessing unit 7 computes the degree of deviation in every standard period of time (step S209). The output unit 6 outputs the degree of deviation to an external device or the like (step S210).

As described above, the malfunction detection device 1b in the second embodiment performs a predetermined process based on the degree of deviation. For example, the malfunction detection device 1b computes the degree of deviation by means of a predetermined analysis process. As a result thereof, the malfunction detection device 1b in the second embodiment can reduce noise in the computed degree of deviation. The malfunction detection device 1b can emphasize the computed degree of deviation.


(Third Embodiment)


The third embodiment differs from the first embodiment in that the malfunction detection device is provided with a plurality of model processing units. Regarding the third embodiment, the differences from the first embodiment will be explained.

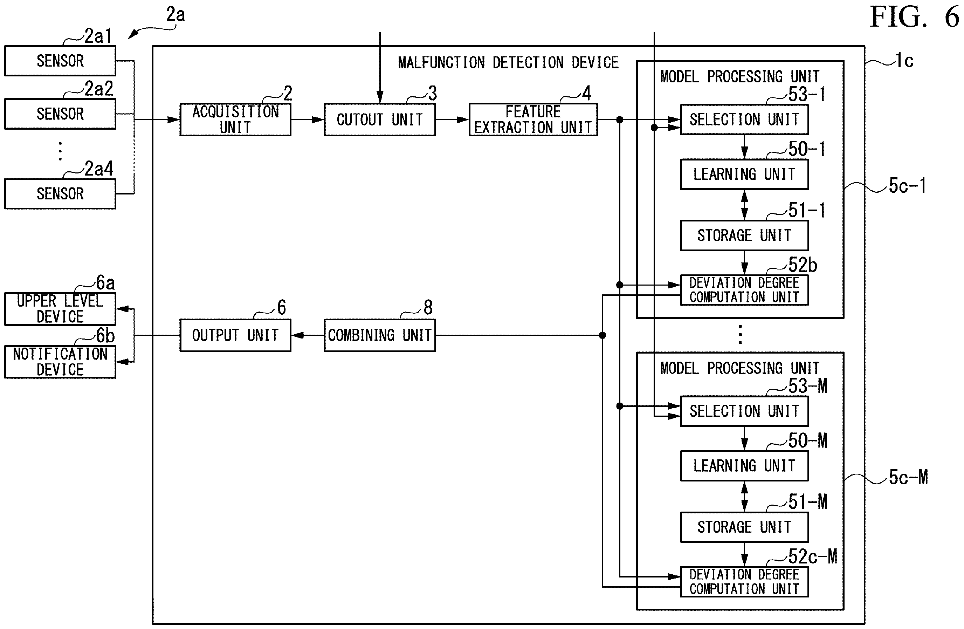

Fig. 6 is a diagram illustrating an example of the structure of a malfunction detection device 1c. The malfunction detection device 1c is provided with an acquisition unit 2, a cutout unit 3, a feature extraction unit 4, M (M being an integer equal to or greater than 2) model processing units 5c, an output unit 6, and a combining unit 8. The model processing units 5c in the malfunction detection device 1c are multiplexed. The model processing units 5c are provided with a learning unit 50, a storage unit 51, a deviation degree computation unit 52c, and a selection unit 53.

In case that the learning control signal represents the on state, the selection unit 53 acquires an extracted feature vector from the feature extraction unit 4. The selection unit 53 decides whether or not to use an acquired feature vector to learn a model based on that feature vector. For example, the selection unit 53 probabilistically selects a feature vector based on whether or not a realized value of uniformly distributed random numbers is a defined value or lower. The selection unit 53 outputs selected feature vectors to the learning unit 50.

The learning unit 50 generates a feature vector model based on the feature vectors selected by the selection unit 53. In case that the learning control signal represents the on state, the deviation degree computation unit 52c computes the degree of deviation between a feature vector of newly acquired device data and the feature vector model. As a result thereof, the M deviation degree computation units 52c can compute M degrees of deviation.

The combining unit 8 acquires a degree of deviation from each deviation degree computation unit 52c and combines the M degrees of deviation. For example, the combining unit 8 combines the M degrees of deviation by computing a statistical quantity (for example, a mean, a maximum value, or the like) of the M degrees of deviation. The combining unit 8 outputs the results of combining the M degrees of deviation to the output unit 6. The output unit 6 outputs the results of combining the M degrees of deviation to an external device.

Next, an example of the operations in the malfunction detection device 1c will be explained.

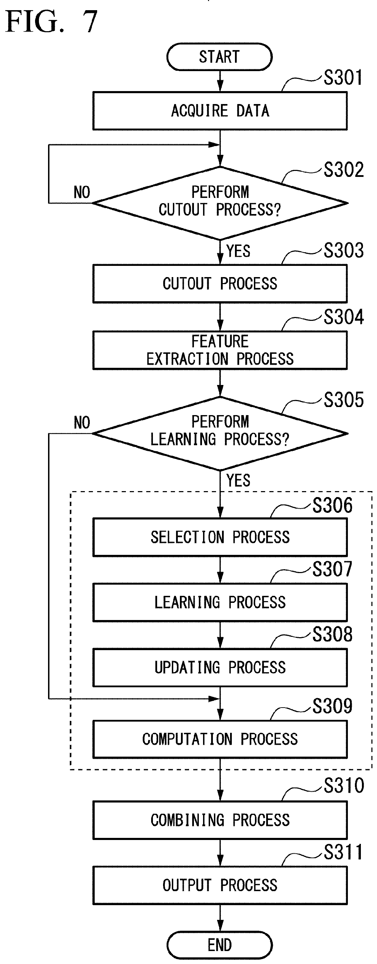

Fig. 7 is a flow chart illustrating an example of the operations in the malfunction detection device 1c. The process from step S301 to step S304 is the same as the process from step S101 to step S104 illustrated in Fig. 3. The process from step S306 to step S308 is performed in each model processing unit 5c.

After step S304, the learning unit 50 determines whether or not the conditions for performing a learning process are established. For example, in case that the learning control signal represents the on state, then the learning unit 50 determines that the conditions for performing a learning process are established (step S305). In case that the conditions for performing a learning process are not established (step S305: NO), then the deviation degree computation unit 52c performs the process in step S309.

In case that the conditions for performing a learning process are established (step S305: YES), then the selection unit 53 selects, from among the acquired feature vectors, a feature vector that is to be analyzed (learning process) by the learning unit 50 (step S306). The learning unit 50 analyzes the selected feature vector z and generates a feature vector model based on the analysis results (step S307). The learning unit 50 updates the feature vector model stored in the storage unit 51 with the newly generated feature vector model (step S308).

The combining unit 8 acquires the degree of deviation from each deviation degree computation unit 52c (step S309). The combining unit 8 combines the M degrees of deviation (step S310). The output unit 6 outputs the degree of deviation to an external device or the like (step S311).

As described above, the malfunction detection device 1c in the third embodiment is provided with M model processing units 5c arranged in parallel. In other words, the malfunction detection device 1c is provided with M selection units 53, M learning units 50, M deviation degree computation units 52c, and a combining unit 8. The selection units 53, based on a learning control signal, select a feature vector that is to be analyzed from among the extracted feature vectors. The learning units 50 analyze the feature vector for each of the selection results of the selection units 53. The learning unit 50 generates M models based on the analysis results. The deviation degree computation units 52c compute the degree of deviation for each feature vector model. The combining unit 8 combines the degrees of deviation computed for each of the feature vector models.

As a result thereof, the malfunction detection device 1c in the third embodiment can stably estimate a feature vector model. The malfunction detection device 1c can stably compute a degree of deviation based on the feature vector model.

(Fourth Embodiment)

The fourth embodiment differs from the first embodiment in that the malfunction detection device converts newly acquired feature vector values to model feature vector values. Regarding the fourth embodiment, the differences from the first embodiment will be explained.

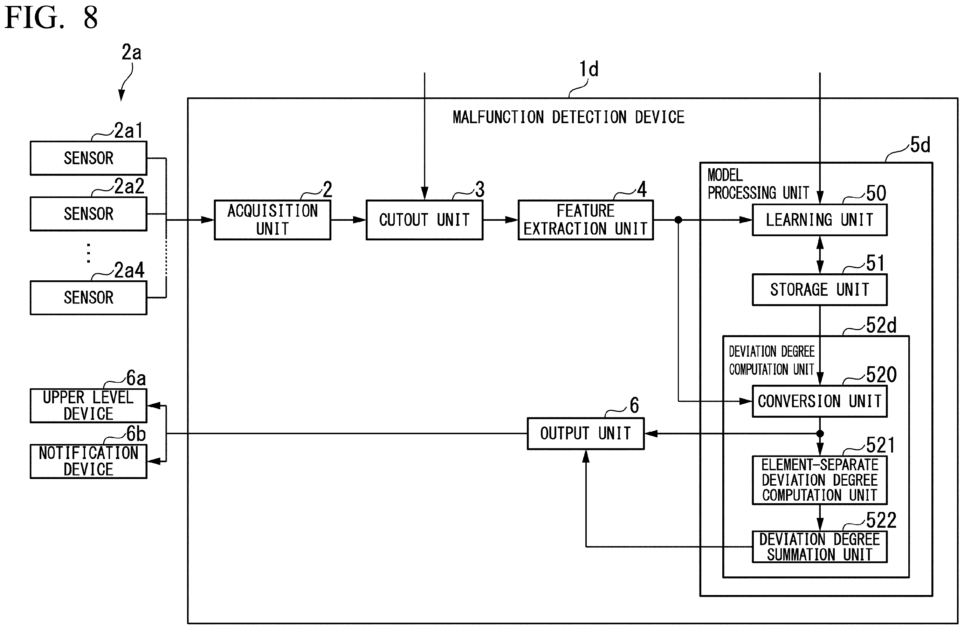

Fig. 8 is a diagram illustrating the structure of a malfunction detection device 1d. The malfunction detection device 1d is provided with an acquisition unit 2, a cutout unit 3, a feature extraction unit 4, a model processing unit 5d, and an output unit 6. The model processing unit 5d is provided with a learning unit 50, a storage unit 51, and a deviation degree computation unit 52d. The deviation degree computation unit 52d is provided with a conversion unit 520, an element-separate deviation degree computation unit 521, and a deviation degree summation unit 522.

The conversion unit 520 acquires a newly extracted feature vector $z(k)$ from the feature extraction unit 4. The conversion unit 520 converts the newly extracted feature vector $z(k)$ to a feature vector $z_{pre}(k)$ in a feature vector model stored in the storage unit 51. In other words, the conversion unit 520 computes a feature vector $z_{pre}(k)$, which is a predicted value for the case in which the newly extracted feature vector $z(k)$ is interpreted within the feature vector model.

For example, in case that the feature vector model is a model based on principal component analysis, the conversion unit 520 computes the feature vector $z_{pre}(k)$ in the feature vector model by performing an inverse transform for returning the feature vector that has been projected in principal component space to the original space. For example, the conversion unit 520 may compute the feature vector $z_{pre}(k)$ in the feature vector model by using an algorithm known as an autoencoder, which is an example of a neural network. The conversion unit 520 outputs the feature vector $z_{pre}(k)$ in the feature vector model to the element-separate deviation degree computation unit 521 and the output unit 6.

The element-separate deviation degree computation unit 521 acquires the feature vector $z_{pre}(k)$ in the feature vector model from the conversion unit 520. The element-separate deviation degree computation unit 521 acquires the newly extracted feature vector $z(k)$ from the conversion unit 520. The element-separate deviation degree computation unit 521 computes the degree of deviation between the newly extracted feature vector $z(k)$ and the feature vector model stored in the storage unit 51 for each element in the feature vector.

The element-separate deviation degree computation unit 521 computes the j-th element of the degree of deviation $a_j(k)$ among m elements in the feature vector, as shown in Expression (9). The element-separate deviation degree computation unit 521 may output, to the output unit 6, the degree of deviation $a_1(k)$, ..., $a_m(k)$ for each element as respective degrees of contribution.

[Expression 9]

$$a_j(k) = \left| z_j(k) - z_{pre,j}(k) \right|^2 \quad \dots (9)$$

The element-separate deviation degree computation unit 521 computes the degree of deviation $a(k)$, which is a scalar value, based on the degree of deviation $a_i(k)$, ..., $a_m(k)$ for each element, for example, as shown in Expression (10).

[Expression 10]

$$a(k) = \sqrt{\frac{1}{m}\sum_{j=1}^{m} a_j(k)}$$

$$\dots (10)$$

The deviation degree summation unit 522 computes the degree of contribution $C_j$ by summing the degree of deviation computed for each element of the feature vector. For example, the deviation degree summation unit 522 normalizes the degree of deviation of the j-th element with the sum of the degrees of deviation for each element, as in Expression (11).
[Expression 11]

$$c_j(k) = \frac{a_j(k)}{\sum_{s=1}^{m} a_s(k)}$$

$$\dots (11)$$

The output unit 6 outputs the degree of deviation of the feature vector to an external device or the like. The output unit 6 may also output, to the external device or the like, the degree of contribution of each element in the feature vector to the degree of deviation.

Next, an example of the operations in the malfunction detection device 1d will be explained.

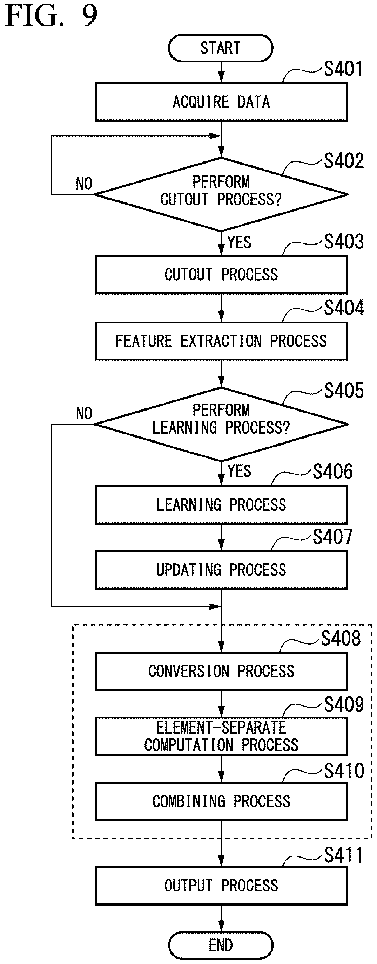

Fig. 9 is a flow chart illustrating an example of the operations in the malfunction detection device 1d. The process from step S401 to step S407 is the same as the process from step S101 to step S107 illustrated in Fig. 3.

The conversion unit 520 converts an extracted feature vector to a feature vector in the feature vector model stored in the storage unit 51 (step S408). The element-separate deviation degree computation unit 521, for each element in the feature vector, computes the degree of deviation between the feature vector of the newly acquired device data and the feature vector model stored in the storage unit 51 (step S409). The deviation degree summation unit 522 computes a degree of contribution by summing the degree of deviation computed for each element in the feature vector (step S410). The output unit 6 outputs the degree of deviation or the like of the feature vector to an external device or the like (step S411).

As described above, the malfunction detection device 1d in the fourth embodiment is provided with a deviation degree computation unit 52d. The deviation degree computation unit 52d is provided with a conversion unit 520, an element-separate deviation degree computation unit 521, and a deviation degree summation unit 522. The conversion unit 520 converts an extracted feature vector to a feature vector in the feature vector model. The element-separate deviation degree computation unit 521 computes the degree of deviation for each element in the feature vector. The deviation degree summation unit 522 sums the degree of deviation computed for each element in the feature vector.

As a result thereof, the malfunction detection device 1d in the fourth embodiment can compute the degree of contribution of the extracted feature vector.

While embodiments of the invention have been described in detail with reference to the drawings above, the specific structure is not limited to these embodiments, and designs or the like within a range not departing from the spirit of the invention are included.

[Reference Signs List]

| | |
|---|---|
| 1a to 1d | Malfunction detection device |
| 2 | Acquisition unit |
| 3 | Cutout unit |
| 4 | Feature extraction unit |
| 5a to 5d | Model processing unit |
| 6 | Output unit |
| 7 | Postprocessing unit |
| 8 | Combining unit |
| 50 | Learning unit |
| 51 | Storage unit |
| 52a to 52d | Deviation degree computation unit |
| 53 | Selection unit |

| 520 | Conversion unit |
|---|---|
| 521 | Element-separate deviation degree computation unit |
| 522 | Deviation degree summation unit |

**Claims**

1. A malfunction detection device comprising:

an acquisition unit configured to acquire data regarding a detection target device;
a cutout unit configured to cut out data from the acquired data based on predetermined conditions;
a feature extraction unit configured to extract a feature vector from the cut-out data;
a learning unit configured to analyze the extracted feature vector and generate a model of the feature vector based on analysis results; and
a deviation degree computation unit configured to compute a degree of deviation between the feature vector of the acquired data and the model.

2. The malfunction detection device according to claim 1, further comprising an output unit configured to output the degree of deviation.

3. The malfunction detection device according to claim 2, wherein:
in case that the degree of deviation indicates a malfunction in the detection target device, the output unit is configured to output the degree of deviation to a notification device configured so as to issue an alarm to an operator in a plant in which the detection target device is installed.

4. The malfunction detection device according to any one of claims 1 to 3, wherein:
the acquisition unit is configured to acquire the data from a plurality of sensors that acquire the data by sensing a state of the detection target device.

5. The malfunction detection device according to any one of claims 1 to 4, wherein:
the predetermined conditions are chronologically consecutive time periods.

6. The malfunction detection device according to any one of claims 1 to 5, wherein:
in case that a learning control signal acquired from an external device is a prescribed value, the learning unit is configured to analyze the extracted feature vector and generate the model of the feature vector based on analysis results.

7. The malfunction detection device according to any one of claims 1 to 6, wherein:
the learning unit is configured to generate, as the model, a multivariate normal distribution represented by a mean vector and a covariance matrix of the extracted feature vector.

8. The malfunction detection device according to any one of claims 1 to 7, wherein:

the malfunction detection device further comprises a storage unit that stores a cumulative sum of feature vectors, and a cumulative sum of matrix products of the feature vectors and transpose matrices thereof; and
in case that a learning control signal acquired from an external device is a prescribed value, the learning unit is configured to add a feature vector extracted by the feature extraction unit to the cumulative sum of the feature vectors stored in the storage unit and update the cumulative sum of the feature vectors stored in the storage unit with the obtained sum, and add the cumulative sum of the matrix product of the matrix of the feature vector extracted by the feature extraction unit and a transpose matrix thereof to the cumulative sum of the matrix products of the feature vectors and transpose matrices thereof stored in the storage unit and update the cumulative sum of the matrix products of the feature vectors and transpose matrices thereof stored in the storage unit with the obtained sum.

9. The malfunction detection device according to any one of claims 1 to 8, wherein:
the deviation degree computation unit is configured to compute, as the degree of deviation, a negative log-likelihood of the feature vector extracted by the feature extraction unit.

**10.** The malfunction detection unit according to any one of claims 1 to 9, further comprising:
a postprocessing unit is configured to perform a predetermined process based on the degree of deviation.

**11.** The malfunction detection device according to any one of claims 1 to 10, wherein:
the predetermined process includes computing the degree of deviation every prescribed period of time, and computing one or more of a simple moving average, an exponentially smoothened average, and a maximum value of the degree of deviation.

**12.** The malfunction detection device according to any one of claims 1 to 11, further comprising:

a plurality of selection units; and
a combining unit; wherein
the learning unit includes a plurality of learning units;
the deviation degree computation unit includes a plurality of deviation degree computation units;
each of the plurality of selection units is configured to select, in accordance with a prescribed process, whether or not to learn the extracted feature vector;
in case that the selection units select that the extracted feature vector is to be learned, each of the plurality of learning units is configured to analyze the feature vector and generate a plurality of the models based on analysis results;
in case that the selection units select that the extracted feature vector is to be learned, each of the plurality of deviation degree computation units is configured to compute the degree of deviation between the feature vector of the acquired data and the model; and
the combining unit is configured to combine the plurality of degrees of deviation computed by the plurality of deviation degree computation units.

**13.** The malfunction detection device according to claim 12, wherein:
each of the plurality of selection units is configured to select whether or not to learn the extracted feature vector based on a realized value of uniformly distributed random numbers.

**14.** The malfunction detection device according to any one of claims 1 to 13, wherein:
the deviation degree computation unit is configured to compute an interpreted value of the feature vector in the model.

**15.** The malfunction detection device according to claim 14, wherein:
the deviation degree computation unit is configured to compute, as the interpreted value, a feature vector obtained by performing an inverse transform that returns the feature vector, which has been projected in principal component space, to the space of the feature vector.

**16.** The malfunction detection device according to claim 15, further comprising:

an element-separate deviation degree computation unit configured to compute the degree of deviation for each element in the feature vector; and
a deviation degree summation unit configured to sum the degrees of deviation computed for each element to compute a degree of deviation of the feature vector.

**17.** The malfunction detection device according to claim 16, wherein:
the element-separate deviation degree computation unit is configured to use the square of the absolute value of the difference between an element in the feature vector and the interpreted value as the degree of deviation for each element in the feature vector.

**18.** The malfunction detection device according to claim 16 or 17, wherein:
the deviation degree summation unit is configured to divide, by the number of elements, the sum total of the degrees of deviation of the elements computed by the element-separate deviation degree computation unit, and use the square root of the quotient as the degree of deviation of the feature vector.

**19.** A malfunction detection method that is performed by a malfunction detection device, the malfunction detection method comprising:

acquiring data regarding a detection target device;

cutting out data from the acquired data based on predetermined conditions;
extracting a feature vector from the cut-out data;
analyzing the extracted feature vector and generating a model of the feature vector based on analysis results; and
computing a degree of deviation between the feature vector of newly acquired data and the model.

20. A malfunction detection program for making a computer perform:

acquiring data regarding a detection target device;
cutting out data from the acquired data based on predetermined conditions;
extracting a feature vector from the cut-out data;
analyzing the extracted feature vector and generating a model of the feature vector based on analysis results; and
computing a degree of deviation between the feature vector of newly acquired data and the model.

21. A computer-readable recording medium recording a malfunction detection program for making a computer perform:

acquiring data regarding a detection target device;
cutting out data from the acquired data based on predetermined conditions;
extracting a feature vector from the cut-out data;
analyzing the extracted feature vector and generating a model of the feature vector based on analysis results; and
computing a degree of deviation between the feature vector of newly acquired data and the model.

FIG. 1

FIG. 2

| | | |
|---|---|---|
| FIRST SENSOR | | |
| SECOND SENSOR | | |
| EXTERNAL FILE | | |
| EXTERNAL STORAGE DEVICE | | |
| CUTOUT CONTROL SIGNAL | ON · · · · · · · · · · · · · · · · · · · · · · · · OFF · · · · · | |

t1                                    t2                    TIME

EP 3 805 885 A1

# FIG. 3

```
                    START
                      │
                      ▼                    ⌇S101
              ┌─────────────────┐
              │  ACQUIRE DATA   │
              └─────────────────┘
                      │
    ┌─────────────────┤
    │                 ▼                    ⌇S102
    │          ╱───────────────╲
    │   NO    ╱     PERFORM      ╲
    │◄───────┤  CUTOUT PROCESS?   │
    │         ╲                   ╱
    │          ╲─────────────────╱
    │                 │ YES           ⌇S103
    │                 ▼
    │          ┌─────────────────┐
    │          │ CUTOUT PROCESS  │
    │          └─────────────────┘
    │                 │                    ⌇S104
    │                 ▼
    │    ┌──────────────────────────┐
    │    │ FEATURE EXTRACTION PROCESS│
    │    └──────────────────────────┘
    │                 │
    │                 ▼                    ⌇S105
    │          ╱───────────────╲
    │   NO    ╱     PERFORM      ╲
    │◄───────┤  LEARNING PROCESS? │
    │         ╲                   ╱
    │          ╲─────────────────╱
    │                 │ YES           ⌇S106
    │                 ▼
    │          ┌─────────────────┐
    │          │ LEARNING PROCESS│
    │          └─────────────────┘
    │                 │                    ⌇S107
    │                 ▼
    │          ┌─────────────────┐
    │          │ UPDATING PROCESS│
    │          └─────────────────┘
    │                 │
    └─────────────────┤
                      ▼                    ⌇S108
              ┌──────────────────────┐
              │ COMPUTATION PROCESS  │
              └──────────────────────┘
                      │                    ⌇S109
                      ▼
              ┌─────────────────┐
              │ OUTPUT PROCESS  │
              └─────────────────┘
                      │
                      ▼
                    END
```

FIG. 4

# FIG. 5

```
                    ┌─────────┐
                    │  START  │
                    └─────────┘
                         │
                         ▼                    S201
            ┌──────────────────────────┐
            │      ACQUIRE DATA         │
            └──────────────────────────┘
                         │
       ┌────────────────▶│
       │                 ▼                    S202
       │           ╱─────────────╲
     NO│          ╱    PERFORM     ╲
       └─────────    CUTOUT PROCESS?  ──
                  ╲                 ╱
                   ╲───────────────╱
                         │ YES              S203
            ┌──────────────────────────┐
            │      CUTOUT PROCESS       │
            └──────────────────────────┘
                         │                  S204
            ┌──────────────────────────┐
            │  FEATURE EXTRACTION PROCESS │
            └──────────────────────────┘
                         │
                         ▼                    S205
                   ╱─────────────╲
     NO           ╱    PERFORM     ╲
       ┌─────────   LEARNING PROCESS? ──
       │          ╲                 ╱
       │           ╲───────────────╱
       │                 │ YES              S206
       │      ┌──────────────────────────┐
       │      │      LEARNING PROCESS     │
       │      └──────────────────────────┘
       │                 │                  S207
       │      ┌──────────────────────────┐
       │      │      UPDATING PROCESS     │
       │      └──────────────────────────┘
       │                 │
       └────────────────▶│
                         ▼                    S208
            ┌──────────────────────────┐
            │    COMPUTATION PROCESS    │
            └──────────────────────────┘
                         │                  S209
            ┌──────────────────────────┐
            │       POSTPROCESSING      │
            └──────────────────────────┘
                         │                  S210
            ┌──────────────────────────┐
            │      OUTPUT PROCESS       │
            └──────────────────────────┘
                         │
                         ▼
                    ┌─────────┐
                    │   END   │
                    └─────────┘
```

FIG. 6

EP 3 805 885 A1

# FIG. 7

```
                    ┌─────────┐
                    │  START  │
                    └────┬────┘
                         │              ╭─S301
                    ┌────▼─────────────┐
                    │  ACQUIRE DATA    │
                    └────┬─────────────┘
        ┌────────────────┤
        │                │              ╭─S302
        │           ╱────▼────╲
   NO   │          ╱  PERFORM  ╲
   ◄────┴─────────   CUTOUT PROCESS?
                     ╲         ╱
                      ╲───┬───╱
                          │ YES          ╭─S303
                    ┌─────▼────────────┐
                    │  CUTOUT PROCESS  │
                    └─────┬────────────┘
                          │              ╭─S304
                    ┌─────▼────────────┐
                    │     FEATURE      │
                    │ EXTRACTION PROCESS│
                    └─────┬────────────┘
                          │              ╭─S305
                     ╱────▼────╲
   NO               ╱  PERFORM  ╲
   ◄───────────────  LEARNING PROCESS?
                     ╲         ╱
                      ╲───┬───╱
                          │ YES
   ┌ ─ ─ ─ ─ ─ ─ ─ ─ ─ ─ ─│─ ─ ─ ─ ─ ─ ┐
                          │              ╭─S306
   │                ┌─────▼────────────┐│
                    │ SELECTION PROCESS │
   │                └─────┬────────────┘│
                          │              ╭─S307
   │                ┌─────▼────────────┐│
                    │ LEARNING PROCESS  │
   │                └─────┬────────────┘│
                          │              ╭─S308
   │                ┌─────▼────────────┐│
                    │ UPDATING PROCESS  │
   │                └─────┬────────────┘│
        ┌─────────────────┤
   │    │                 │             ╭│S309
        └───────────┐     │
   │          ┌─────▼─────▼──────────┐  │
              │ COMPUTATION PROCESS   │
   │          └─────┬────────────────┘  │
   └ ─ ─ ─ ─ ─ ─ ─ ─│─ ─ ─ ─ ─ ─ ─ ─ ─ ┘
                          │              ╭─S310
                    ┌─────▼────────────┐
                    │ COMBINING PROCESS │
                    └─────┬────────────┘
                          │              ╭─S311
                    ┌─────▼────────────┐
                    │  OUTPUT PROCESS  │
                    └─────┬────────────┘
                          │
                    ┌─────▼───┐
                    │   END   │
                    └─────────┘
```

# FIG. 8

FIG. 8

MALFUNCTION DETECTION DEVICE — 1d

2a

- SENSOR — 2a1
- SENSOR — 2a2
- ⋮
- SENSOR — 2a4

ACQUISITION UNIT — 2

CUTOUT UNIT — 3

FEATURE EXTRACTION UNIT — 4

MODEL PROCESSING UNIT — 5d

LEARNING UNIT — 50

STORAGE UNIT — 51

DEVIATION DEGREE COMPUTATION UNIT — 52d

CONVERSION UNIT — 520

ELEMENT-SEPARATE DEVIATION DEGREE COMPUTATION UNIT — 521

DEVIATION DEGREE SUMMATION UNIT — 522

OUTPUT UNIT — 6

UPPER LEVEL DEVICE — 6a

NOTIFICATION DEVICE — 6b

EP 3 805 885 A1

# FIG. 9

```
           ┌─────────────┐
           │    START    │
           └──────┬──────┘
                  ▼                    S401
        ┌──────────────────────┐
        │    ACQUIRE DATA      │
        └──────────┬───────────┘
                   │
                   ▼                   S402
        ╱───────────────────╲
  NO   ╱      PERFORM         ╲
◄──────       CUTOUT PROCESS?  
        ╲                     ╱
         ╲───────────────────╱
                  │ YES               S403
                  ▼
        ┌──────────────────────┐
        │    CUTOUT PROCESS    │
        └──────────┬───────────┘
                   ▼                   S404
        ┌──────────────────────┐
        │ FEATURE EXTRACTION PROCESS │
        └──────────┬───────────┘
                   ▼                   S405
        ╱───────────────────╲
  NO   ╱      PERFORM         ╲
◄──────     LEARNING PROCESS?  
        ╲                     ╱
         ╲───────────────────╱
                  │ YES               S406
                  ▼
        ┌──────────────────────┐
        │   LEARNING PROCESS   │
        └──────────┬───────────┘
                   ▼                   S407
        ┌──────────────────────┐
        │   UPDATING PROCESS   │
        └──────────┬───────────┘
                   │
  ┌ ─ ─ ─ ─ ─ ─ ─ ─▼─ ─ ─ ─ ─ ─ ─ ─ ─ ┐
                                       S408
  │ ┌──────────────────────┐          │
    │  CONVERSION PROCESS  │
  │ └──────────┬───────────┘          │
               ▼                       S409
  │ ┌──────────────────────┐          │
    │   ELEMENT-SEPARATE   │
  │ │  COMPUTATION PROCESS │          │
    └──────────┬───────────┘
  │            ▼                       S410
    ┌──────────────────────┐          │
  │ │  COMBINING PROCESS   │
    └──────────┬───────────┘          │
  └ ─ ─ ─ ─ ─ ─▼─ ─ ─ ─ ─ ─ ─ ─ ─ ─ ─ ┘
               ▼                       S411
    ┌──────────────────────┐
    │    OUTPUT PROCESS    │
    └──────────┬───────────┘
               ▼
           ┌─────────────┐
           │     END     │
           └─────────────┘
```

## INTERNATIONAL SEARCH REPORT

| International application No. |
| --- |
| PCT/JP2019/017645 |

**A. CLASSIFICATION OF SUBJECT MATTER**
Int.Cl. G05B23/02(2006.01)i

According to International Patent Classification (IPC) or to both national classification and IPC

**B. FIELDS SEARCHED**

Minimum documentation searched (classification system followed by classification symbols)
Int.Cl. G05B23/02

Documentation searched other than minimum documentation to the extent that such documents are included in the fields searched

|  |  |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2011-70635 A (HITACHI, LTD.) 07 April 2011,<br>paragraphs [0028]–[0074], fig. 1A, 9A-9D<br>& US 2012/0290879 A1, paragraphs [0062]–[0116], fig.<br>1A, 9A-9D & WO 2011/024382 A1 | 1-6, 8, 10, 19-21<br>7, 9, 11-18 |
| Y | JP 2011-242942 A (NEC CORPORATION) 01 December 2011,<br>paragraph [0020]<br>(Family: none) | 7 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25.06.2019 | Date of mailing of the international search report<br>09.07.2019 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2019/017645

| | C (Continuation). DOCUMENTS CONSIDERED TO BE RELEVANT | |
|---|---|---|
| Category* | Citation of document, with indication, where appropriate, of the relevant passages | Relevant to claim No. |
| Y | WO 2017/090098 A1 (HITACHI, LTD.) 01 June 2017, paragraph [0077] (Family: none) | 9 |
| Y | WO 2017/164368 A1 (MITSUBISHI HEAVY INDUSTRIES, LTD.) 28 September 2017, paragraph [0022] & US 2019/0003927 A1, paragraph [0037] & EP 3388911 A1 | 11 |
| Y | JP 2013-218725 A (HITACHI, LTD.) 24 October 2013, paragraphs [0020], [0028], fig. 1, 6 (Family: none) | 12-13 |
| Y | JP 2014-32657 A (HITACHI POWER SOLUTIONS CO., LTD.) 20 February 2014, paragraph [0031] (Family: none) | 13 |
| Y | 櫻田 麻由, 矢入 健久, オートエンコーダを用いた次元削減による宇宙機の異常検知, 一般社団法人 人工知能学会 第28回全国大会論文集 CD-ROM, 12 May 2014, pp. 1-3, particularly, p. 1, left column, 「2. オートエンコーダによる異常検知」, first paragraph to p. 2, left column, 「2. オートエンコーダによる異常検知」, last paragraph, formula (3), (SAKURADA, Mayu, YAIRI, Takehisa, Dimensionality reduction with the autoencoder for anomaly detection of spacecrafts), non-official translation (Proceedings of the 28th Annual Conference of JSAI CD-ROM, "2. Anomaly detection by autoencoder") | 14-18 |

Form PCT/ISA/210 (continuation of second sheet) (January 2015)

**REFERENCES CITED IN THE DESCRIPTION**

**Patent documents cited in the description**

- JP 2018104007 A

- JP 2013218725 A